# EUROPÄISCHE PATENTSCHRIFT

(11) **EP 2 885 122 B1**
(45) Veröffentlichungstag und Bekanntmachung des Hinweises auf die Patenterteilung: **27.06.2018**
(21) Anmeldenummer: 13741795.2
(22) Anmeldetag: 29.07.2013
(51) Int. Cl.: B29C 63/22, B62D 29/04, B29C 63/02, B32B 27/08

(54) **KFZ-BAUTEIL MIT FOLIENOBERFLÄCHE UND SEIN HERSTELLUNGSVERFAHREN**
AUTOMOTIVE COMPONENT HAVING A FILM SURFACE AND METHOD FOR PRODUCING SAID AUTOMOTIVE COMPONENT
PIÈCE DE VÉHICULE À MOTEUR À SURFACE SOUS FORME DE FEUILLE ET SON PROCÉDÉ DE FABRICATION

(30) Priorität: 16.08.2012 DE 102012214562
(43) Veröffentlichungstag der Anmeldung: 24.06.2015
(73) Patentinhaber: Bayerische Motoren Werke Aktiengesellschaft, 80809 München (DE)
(72) Erfinder: HUBER-HESSELBERGER, Josef, 80999 Muenchen (DE); SCHWARZ, Manuel, 84028 Landshut (DE); SIEMSEN, Peter, 85540 Haar (DE)
(86) Internationale Anmeldenummer: PCT/EP2013/065926
(87) Internationale Veröffentlichungsnummer: WO 2014/026847

(56) Entgegenhaltungen:
- EP-A2- 1 955 840
- US-A1- 2008 311 349

## Beschreibung

Die Erfindung betrifft ein Fahrzeugbauteil zur Außenverkleidung eines Kraftfahrzeugs mit einer formgebenden, unlackierten Trägerstruktur und einer Folie, wobei die Folie mit einem Klebstoff zumindest auf einer Oberfläche der Trägerstruktur befestigt ist. Kraftfahrzeugbauteile, die im Exterieurbereich von Fahrzeugen montiert sind, werden im Allgemeinen lackiert, um eine ansprechende optisch, sichtbare Oberfläche zu erzeugen. Auch faserverstärkte Fahrzeugkomponenten, wie beispielsweise Dachelemente aus kohlefaserverstärktem Kunststoff für Sportwagen, werden mit einem transparenten Lack beschichtet, um eine möglichst glatte Oberfläche zu erzeugen und die Sichtbarkeit der darunter liegenden Kohlefaserstruktur zu gewährleisten.
Darüber hinaus sind im Stand der Technik Folierverfahren bekannt, wobei eine Folie auf die Außenhaut des Fahrzeugs aufgebracht wird. Die Folierung ganzer Fahrzeuge dient der Individualisierung, wobei häufig matte Farben als Oberfläche gewählt werden. Zudem wird die Funktion von Kommunalfahrzeugen, wie beispielsweise Polizei, Feuerwehr oder anderen Sonderfahrzeugen durch aufgeblebte Folie gekennzeichnet. Üblicherweise wird hier die Folie manuell mit Hilfe von Rakeln auf die Fahrzeugaußenhaut aufgebracht. Die Wertigkeit bzw. Wertbeständigkeit dieser Folien ist jedoch nicht auf die Gesamtfahrzeug-Lebensdauer ausgelegt bzw. kann diese auch nicht abdecken. Aufgrund des Rakelverfahrens können nur Folientypen verarbeitet werden, welche die Oberflächenkontur leicht nachbilden. Diese anschmiegsamen Folientypen folgen dem Konturverlauf der darunter liegenden Bauteile und bilden diese nach außen hin sichtbar mit hoher Detailtreue nach. Eine Verarbeitung dieser Folien bei erhöhter Temperatur, um die Anschmiegsamkeit steiferer Folien zu verbessern, hat jedoch den Nachteil, dass sich dabei auf der Oberfläche Rakelspuren abzeichnen. Folien mit bereits vernetzter Oberfläche, die eine besonders hohe Wertbeständigkeit aufweisen, lassen sich nicht auf Fahrzeugbauteile applizieren.
Darüber hinaus erreichen die rakelbaren Folien nicht den geforderten Qualitätsstandard von Lack. Ferner werden derartige Folien durch Umwelteinflüssen lokal beschädigt, beispielsweise in Form von Rissen oder Farbänderungen. Von diesen Rissen aus löst sich dann die Folie großflächig von dem darunter liegenden Bauteil, so dass das Bauteil freiliegt bzw. die ursprüngliche Lackierung zum Vorschein kommt.
Die US 2008/0311349 A1 zeigt einen metallisierten Film, der mehrere Schichten umfasst, in denen eine Metallschicht zwischen zwei vernetzten polymeren Schichten angeordnet ist. Bei einem Dichstungselement ("weatherstrip") ist eine unlackierte Trägerstruktur in dieser Druckschrift möglicherweise implizit offenbart, dies jedoch nicht bei einem Fahrzeugaußenverkleidungsbauteil. Aufgabe der Erfindung ist es daher, ein Fahrzeugbauteil sowie ein Verfahren zur Herstellung eines Fahrzeugbauteils der eingangs genannten Art bereitzustellen, das die Anforderung in punkto Wertigkeit und Wertbeständigkeit sowie die hohen qualitativen Ansprüche bezüglich der Oberfläche erfüllt.
Die Lösung dieser Aufgabe erfolgt mit einer Vorrichtung bzw. mit einem Verfahren mit den Merkmalen der unabhängigen Ansprüche.

Besonders zu bevorzugende Ausführungsformen und Weiterbildungen der Erfindung sind Gegenstand der Unteransprüche.

Zur Lösung dieser Aufgabe lehrt die Erfindung ein Fahrzeugbauteil zur Außenverkleidung eines Kraftfahrzeugs mit einer formgebenden unlackierten Trägerstruktur und einer Folie, wobei die Folie mit einem Klebstoff zumindest auf einer Oberfläche der Trägerstruktur befestigt ist. Dabei kann die Folie thermoumformbar sein. Thermoumformbare Folien, die im Sinne der Erfindung verwendet werden, zeichnen sich durch gute Verformungseigenschaften aus, wenn diese erwärmt werden und bieten gleichzeitig eine hohe Widerstandsfähigkeit gegen Beschädigungen. Solche Folien sind widerstandsfähig gegen Verunreinigungen mit Harz, Vogelkot, Chemikalien, sowie gegen mechanische Beanspruchung in Form von Kratzern. Durch die Verwendung von thermoumformbaren Folien wird der Erweichungspunkt der äußersten Schicht des Außenhautbauteils nach oben verschoben, so dass diese Bauteile besonders stabil sind gegenüber Hitzeentwicklung. Bei starker Sonneneinstrahlung bietet diese Folie den Vorteil gegenüber den aus dem Stand der Technik bekannten Folien, dass keine Erweichung stattfindet und somit keine Oberflächenveränderungen erkennbar sind. Nicht zuletzt bietet die Folie den Vorteil, dass eine Class-A Oberfläche erzielt werden kann, die im heutigen Fahrzeugbau gefordert wird und im Allgemeinen bislang durch Lackschichten erzeugt wird.

Darüber hinaus ist die Folie mehrlagig aufgebaut. Mit einer Trägerlage und einer Beschichtung.
Die Trägerlage kann dabei zumindest abschnittsweise transparent, transluzent und/oder opak ausgebildet sein. Solche Folien ermöglichen Designvariationen, die mit einer Lackierung nur unter größtmöglichem Aufwand darstellbar sind. Somit bietet diese Folie den Vorteil, dass der Aufwand bei der Herstellung eines Fahrzeugbauteils reduziert wird. Ferner können damit mehrfarbige Fahrzeugbauteile, beispielsweise mit Bedruckungen oder Namensstrukturen auf besonders einfache Weise erzielt werden.

Die Trägerlage kann dabei insbesondere zumindest aus Polycarbonat, einem Polycarbonat-Blend, Polycarbonat-Copolymer, Poyethylenterephthalat, Polyethersulfon, Acrylester-Styrol-Acrylnitril (ASA), einem Acrylester-Styrol-Acrylnitril-Blend, thermoplastischem Polyurethan (TPU), Polyolefin, Polymethylmethacrylat (PMMA), Polyvinylidenfluorid (PVDF) und/oder einer Kombination daraus aufgebaut sein.
Als Material für die Beschichtung eignet sich insbesondere ein aliphatisches Polyurethan. Darüber hinaus kann die Beschichtung auch Additive umfassen, welche die Beschichtung gegen Alterung schützen. Ferner können auch UV-Absorber in der Beschichtung vorgesehen werden, beispielsweise Tinuvin. Darüber hinaus ist die Beschichtung mittels kurzwelliger Strahlung, insbesondere UV-Licht vernetzbar. Dies bietet den Vorteil, dass die thermoformbare Folie während des Umformens bzw. während des Aufbringens auf die Trägerstruktur gute Umformeigenschaften aufweist und nach dem Vernetzen eine ausreichende Härte an der Oberfläche des Bauteils bietet.
Weiterhin kann die Trägerstruktur des Fahrzeugbauteils aus glas- oder kohlefaserverstärktem Kunststoff ausgebildet sein. Die Erfindung kann jedoch auch für Fahrzeugbauteile eingesetzt werden, bei denen die Trägerstruktur aus metallischem Material, hier insbesondere Eisenbleche oder Aluminiumbleche ausgebildet ist. Natürlich kann die Trägerstruktur auch aus anderen, faserverstärkten Kunststoffen bestehen, wobei die Fasern aus Basalt, Aramid, Naturfasern, beispielsweise Hanf, ausgebildet sind. Darüber hinaus kann als Trägerstruktur auch eine Leichtbauwabenstruktur verwendet werden.
In einem weiteren Aspekt betrifft die Erfindung ein Verfahren zur Herstellung eines Fahrzeugbauteils, der vorgehend beschriebenen Art, mit den Schritten Erzeugen einer Trägerstruktur, Aufbringen einer thermoumgeformten Folie auf zumindest eine Oberfläche der Trägerstruktur, wobei die Folie mehrlagig aufgebaut ist und eine Trägerlage und eine Beschichtung umfaßt, Verkleben der Folie mit der Trägerstruktur. Darüber hinaus kann das Verfahren einen Fertigungsschritt umfassen, bei dem nach dem Aufbringen der Folie auf die Trägerstruktur die Beschichtung der Folie vernetzt wird. Das Überziehen der Trägerstruktur mit einer mehrschichtigen Folie im Thermoformverfahren mit anschließender Vernetzung der Oberfläche bietet wie bereits oben beschrieben den Vorteil, dass die geforderten Dauergebrauchseigenschaften wie Kratzfestigkeit und Umweltbeständigkeit sichergestellt werden können. Das Thremoumformen und Verkleben der Folie mit der Trägerstruktur kann vorzugsweise gleichzeitig erfolgen.

Darüber hinaus kann die Vernetzung der Beschichtung mit kurzwelliger Strahlung realisiert werden. Dabei wird die Beschichtung insbesondere mit UV-Licht beaufschlagt.

Darüber hinaus kann die Folie unmittelbar vor dem Aufbringen auf die Trägerstruktur thermoumgeformt werden.

In einer ersten Ausführungsform der Erfindung wird eine Folie hergestellt, die mit einem Thermoumformverfahren in ihre endgültige äußere geometrische Form überführt wird. Anschließend wird die umgeformte Folie auf die Trägerstruktur aufgeklebt. Dadurch können kleine Bauteile wie insbesondere Spiegelkappen mit einer Folie versehen werden.

In einer zweiten Ausführungsform des Verfahrens wird die thermoumformbare Folie zunächst hergestellt und beim Verkleben mit der Trägerstruktur thermoumgeformt.

Dabei kann die Folie bei deren Herstellung eine Trägerlage, eine Deckschicht und eine Klebstoffschicht aufweisen. Dieser Kleber wird im Sinne einer Pressure-Sensitive-Schicht beim Verpressen auf die Trägerstruktur des Fahrzeugbauteils aktiviert. In einer weiteren alternativen Form kann die Folie eine Beschichtung und eine Trägerlage aufweisen. Kurz vor dem Aufbringen auf die Trägerstruktur wird auf die der Beschichtung gegenüberliegende Seite der Trägerlage ein Klebstoff aufgebracht. Dabei handelt es sich insbesondere um einen reaktiven Hot-Melt-Klebstoff, mit einer Reaktionszeit von 6 bis 8 h. Innerhalb dieser Zeit muss die Folie mit der Trägerstruktur verbunden werden, wonach der Klebstoff aushärtet. Eine Trennung von Folie und Trägerstruktur ist nur noch durch Zerstörung der Kleberschicht möglich. Bei der Herstellung der Folie wird zunächst die Trägerlage erzeugt und anschließend diese mit dem Beschichtungswerkstoff lackiert oder beschichtet.

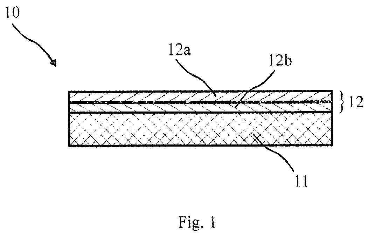

Nachfolgend wird die Erfindung anhand einer Ausführungsform unter Bezugnahme auf die Figur 1 näher erläutert. Dabei zeigt schematisch und beispielhaft Figur 1 einen Querschnitt durch ein erfindungsgemäßes Fahrzeugbauteil.

Das Bauteil 10 weist eine Trägerstruktur 11 auf, die aus einem faserverstärkten Kunststoff, einem thermoplastischen Kunststoff oder aus einem metallischen Material ausgebildet sein kann. Die Trägerstruktur 11 entspricht einem Außenhautbauteil eines Kraftfahrzeuges, beispielsweise eines Daches, einer Tür, einer Stoßstange usw. Auf einer zur Fahrzeugaußenseite gerichteten Oberfläche der Trägerstruktur 11 ist eine Folie 12 aufgebracht. Die Folie 12 umfasst eine Trägerlage 12b und eine Beschichtung 12a. Die Folie 12 wird dabei mit Hilfe eines Klebstoffes auf die Trägerstruktur 11 aufgeklebt. Die Folie kann dabei mit einer Farbe versehen sein oder transparent oder transluzent ausgebildet sein. Die Folie 12 kann dabei eine glänzende, eine matte oder eine daraus kombinierte Oberfläche aufweisen.

Dadurch kann auf die Lackierung von Fahrzeugbauteilen verzichtet werden und somit ein energiesparender Fertigungsprozess für Autobauteile erzeugt werden. Darüber hinaus werden auch die Anlageninvestitionskosten, für die Lackiervorrichtungen eingespart. Die Folierung von Kraftfahrzeugaußenhautbauteilen bietet eine Vielfalt von Gestaltungsmöglichkeiten wie Mehrfarbigkeit, das Einbringen von Logos, Bildern und dergleichen, wenn die verwendeten Folien zumindest abschnittsweise farblich, transparent oder transluzent sind.Gegenüber Lackierverfahren wird der Aufwand auf ein Mindestmaß reduziert wird, wodurch auch eine Serienanwendung solcher folierter Fahrzeugbauteile realisiert werden kann.

## Patentansprüche

1. Fahrzeugaußenverkleidungsbauteil (10) mit
- einer formgebenden unlackierten Trägerstruktur (11), und
- einer Folie (12), wobei
die Folie (12) mit einem Klebstoff zumindest auf einer Oberfläche der Trägerstruktur (11) befestigt ist, wobei die Folie (12) thermoumformbar ist,
die Folie (12) mehrlagig aufgebaut ist, mit einer Trägerlage (12b) und einer Beschichtung (12a),
die Beschichtung (12a) mittels kurzwelliger Strahlung, insbesondere UV-Licht vernetzbar und
die Trägerstruktur (11) aus glas- oder kohlefaserverstärktem Kunststoff, Blech, Aluminiumblech und/oder einer Leichtbauwabenstruktur ausgebildet ist.

2. Fahrzeugaußenverkleidungsbauteil (10) nach Anspruch 1, **dadurch gekennzeichnet, dass**
die Trägerlage (12b) zumindest abschnittsweise transparent, transluzent und/oder opak ist.

3. Fahrzeugaußenverkleidungsbauteil nach einem der Ansprüche 1 oder 2, **dadurch gekennzeichnet, dass**
die Trägerlage (12b) zumindest Polycarbonat, Polycarbonat-Blend, Polycarbonat-Copolymer, Poyethylenterephthalat, Polyethersulfon, Acrylester-Styrol-Acrylnitril, Acrylester-Styrol-Acrylnitril-Blend, Thermoplastischem Polyurethan, Polyolefin, Polymethylmethacrylat und/oder Polyvinylidenfluorid umfasst.

4. Fahrzeugaußenverkleidungsbauteil nach einem der Ansprüche 1 bis 3, **dadurch gekennzeichnet, dass**
die Beschichtung (12a) aliphatisches Polyurethan umfasst.

5. Verfahren zur Herstellung eines Fahrzeugaußenverkleidungsbauteils (40) nach einem der Ansprüche 1 bis 4, mit den Schritten:
- Erzeugen einer Trägerstruktur (11) aus glas- oder kohlefaserverstärktem Kunststoff, Blech, Aluminiumblech und/oder einer Leichtbauwabenstruktur,
- Aufbringen einer thermoumgeformten Folie (12) auf zumindest eine Oberfläche der Trägerstruktur (11), wobei die Folie mehrlagig aufgebaut ist und eine Trägerlage (12b) und eine Beschichtung (12a) umfasst,
- Verkleben der Folie (12) mit der Trägerstruktur (11),
**dadurch gekennzeichnet, dass**
- nach dem Aufbringen der Folie (12) auf die Trägerstruktur (11) die Beschichtung (12a) der Folie (12) vernetzt wird.

6. Verfahren nach Anspruch 5, **dadurch gekennzeichnet, dass** zum Vernetzen der Beschichtung (12a), diese mit kurzwelliger Strahlung, insbesondere mit UV-Licht, beaufschlagt wird.

7. Verfahren nach einem der Ansprüche 5 oder 6, **dadurch gekennzeichnet, dass**
die Folie (12) unmittelbar vor dem Aufbringen auf die Trägerstruktur (11) thermoumgeformt wird.

## Claims

1. An external vehicle skin component (10), having
- a shaping unpainted support structure (11), and
- a film (12), wherein
the film (12) is fastened at least to a surface of the support structure (11) with an adhesive,
wherein the film (12) is thermoformable,
the film (12) is of multilayer construction, with a support layer (12b) and a coating (12a),
the coating (12a) can be cross-linked by means of short-wave radiation, especially UV light, and
the support structure (11) is formed from glass fibre- or carbon fibre-reinforced plastics material, sheet metal, aluminium sheet and/or a lightweight honeycomb structure.

2. An external vehicle skin component (10) according to Claim 1, **characterised in that**
the support layer (12b) is transparent, translucent and/or opaque at least in portions.

3. An external vehicle skin component according to one of Claims 1 or 2, **characterised in that**
the support layer (12b) comprises at least polycarbonate, polycarbonate blend, polycarbonate copolymer, polyethylene terephthalate, polyether sulphone, styrene-acrylonitrile acrylate, styrene-acrylonitrile acrylate blend, thermoplastic polyurethane, polyolefin, polymethyl methacrylate and/or polyvinylidene fluoride.

4. An external vehicle skin component according to one of Claims 1 to 3, **characterised in that**
the coating (12a) comprises aliphatic polyurethane.

5. A method for producing an external vehicle skin component (40) according to one of Claims 1 to 4, having the steps:
- producing a support structure (11) from glass fibre- or carbon fibre-reinforced plastics material, sheet metal, aluminium sheet and/or a lightweight honeycomb structure,
- applying a thermoformed film (12) to at least one surface of the support structure (11), wherein the film is of multilayer construction and comprises a support layer (12b) and a coating (12a),
- gluing the film (12) to the support structure (11),
**characterised in that**
- once the film (12) has been applied to the support structure (11), the coating (12a) of the film (12) is cross-linked.

6. A method according to Claim 5, **characterised in that** to cross-link the coating (12a), it is exposed to short-wave radiation, especially UV light.

7. A method according to one of Claims 5 or 6, **characterised in that** the film (12) is thermoformed immediately prior to being applied to the support structure (11).

## Revendications

1. Elément d'habillage externe d'un véhicule (10) comprenant :
- une structure de support (11) non vernie lui conférant sa forme (11), et
- une feuille (12),
la feuille (12) étant fixée au moyen d'une colle au moins sur une surface de la structure de support (11),
la feuille (12) étant thermoformable,
la feuille (12) étant réalisée en plusieurs couches, et comportant une couche de support (12b) et un revêtement (12a),
le revêtement (12a) pouvant être réticulé par irradiation avec des ondes courtes, en particulier de la lumière UV,
la structure de support (11) étant réalisée en un matériau synthétique renforcé par des fibres de verre ou des fibres de carbone, en tôle, en tôle d'aluminium et/ou en une structure légère en nids d'abeilles.

2. Elément d'habillage externe (10) d'un véhicule conforme à la revendication 1,
**caractérisé en ce que**
la couche de support (12b) est transparente, translucide et/ou opaque au moins par segments.

3. Elément d'habillage externe d'un véhicule conforme à l'une des revendications 1 et 2,
caractérisé en que
la couche de support (12b) renferme au moins l'un des composés suivants : polycarbonate, polycarbonate mélangé, copolymère de polycarbonate, polyéthylènetéréphtalate, polyéthersulfone, acrylester-styrène-acrylonitrile, acrylester-styrène-acrylonitrile mélangé, polyuréthane thermoplastique, polyoléfine, polyméthylméthacrylate et/ou fluorure de polyvinylidène.

4. Elément d'habillage externe d'un véhicule conforme à l'une des revendications 1 à 3,
**caractérisé en ce que**
le revêtement (12a) renferme du polyuréthane aliphatique.

5. Procédé d'obtention d'un élément d'habillage externe d'un véhicule (40) conforme à l'une des revendications 1 à 4,
comprenant des étapes consistant à :
- fabriquer une structure de support (11) en un matériau synthétique renforcé par des fibres de verre ou des fibres de carbone, en tôle, en tôle d'aluminium et/ou en une structure légère en nids d'abeilles,
- appliquer une feuille thermoformée (12) sur au moins une surface de la structure de support (11), la feuille étant réalisée en plusieurs couches et comprenant une couche de support (12b) et un revêtement (12a),
- coller la feuille (12) à la structure de support (11),
**caractérisé en ce que**
après l'application de la feuille (12) sur la structure de support (11) le revêtement (12a) de la feuille (12) est réticulé.

6. Procédé conforme à la revendication 5,
**caractérisé en ce que**
pour permettre de réticuler le revêtement (12a), celui-ci est irradié avec des ondes courtes, en particulier de la lumière UV.

7. Procédé conforme à l'une des revendications 5 à 6,
**caractérisé en ce que**
la feuille (12) est thermoformée immédiatement avant son application sur la structure de support (11).
